# EUROPEAN PATENT APPLICATION

(11) **EP 2 360 219 A1**
(43) Date of publication of application: **24.08.2011**
(21) Application number: 09817777.7
(22) Date of filing: 29.09.2009
(51) Int. Cl.: C09J 133/06, C09J 11/06, C09J 133/04

(54) **FLAME-RETARDANT HOT-MELT TYPE ADHESIVE AGENT**

(30) Priority: 30.09.2008 JP 2008254278
(71) Applicant: Henkel Corporation, Rocky Hill, CT 06067 (US)
(72) Inventor: ITO, Shouko, Minoo-shi Osaka 562-8586 (JP); YOSHIDA, Yoshio, Minoo-shi Osaka 562-8586 (JP)
(74) Representative: Kann, Wolfgang
(86) International application number: PCT/JP2009/066964
(87) International publication number: WO 2010/038745

(57) **Abstract**

The present invention provides a hot melt adhesive that has excellent overall performance such as flame retardancy, adhesion, storage stability, and processability and the like even though not containing a flame inhibitor that impacts the environment such as a halogen compound or antimony oxide or the like. The hot melt adhesive of the present invention contains (A) a (meth)acrylate ester polymer and (B) a phosphorous-based compound that is liquid at 180°C, and has excellent performance such as flame retardancy, adhesion, storage stability, and processability and the like even though not containing a flame retardant that impacts the environment such as a halogen compound or antimony oxide or the like. The flame retardancy can be further enhanced and the processability can also be further enhanced if (C) a metal hydroxide is also included. An article coated with the hot melt adhesive of the present invention will be gentle on the environment, be very safe on humans, and have excellent performance such as flame retardancy, adhesion, storage stability, and processability and the like.

## Description

### FIELD

The present invention concerns a hot-melt adhesive not containing, as a flame retardant, halogen compounds producing harmful halogen gases during combustion and antimony oxide identified as affecting the human body, and having superior flame-retardant properties, and the present invention specifically concerns a hot-melt adhesive with superior heat-sealing properties, storage stability, and workability.

### TECHNICAL BACKGROUND

Recently, increased functionality in electrical and electronic-related goods has engendered use of a large number of different components. To protect these components from the effects of electromagnetic waves produced by electrical and electronic goods, i.e., to counter EMI, shielding materials which absorb electromagnetic waves have been applied to the internal components of electrical and electronic goods; however, to allow greater size reduction of electrical and electronic-related goods, such shielding materials are now often provided in housings in a semi-sealed state. The internal components of electrical and electronic-related goods assembled in such a semi-sealed state are prone to heat build-up, and from a safety perspective such as prevention of fires caused by ignition, all product-related components should be made flame retardant.

In conjunction with these needs for flame retardancy, the adhesives used to secure electrical and electronic components and electromagnetic shielding materials must now also have high flame retardancy. Electromagnetic shielding materials in particular are generally manufactured in the form of laminated films which use synthetic resin films as a substrate, and such materials are also manufactured in the form of cloth-like sheets which use synthetic resin fibers as a substrate, and consequently, it is difficult to impart sufficient flame retardancy to the electromagnetic shielding material itself. As a result, the adhesives used to secure electromagnetic shielding materials must have high flame retardancy.

Various adhesives have been used to secure such electromagnetic shielding and various other materials of this nature, for example, solvent-based adhesives and hot-melt adhesives. Over time, with consideration of industrial health issues, solvent-based adhesives containing solvents have become unfavorable for their volatilization of the solvent in the process whereby the adhesive is applied to the materials described above.

Hot-melt adhesives are solid adhesives at ambient temperature and adhere in a heated, molten state. Because these adhesives physically harden when the temperature of the adhesive in a molten state declines, adhesion can be produced in an extremely short time, and such adhesives have the characteristic that a solvent is typically not included.

The flame retardancy imparted by such hot-melt adhesives has been studied. For example, Patent Reference 1 discloses a flame-retardant, electroconductive wiping cloth wherein a resin layer containing a flame retardant is formed on a surface of a cloth made from electroconductive organic fibers, and on the other surface is formed a hot-melt resin adhesive 30-100 µm in thickness and containing a flame retardant. Specifically, the resin layer is formed using a solvent-based acrylic resin containing a brominated fire retardant in polyester fibers; on the other surface, a urethane resin is used as a hot-melt resin; and a fire retardant containing a phosphorus-based, halogen-based, and antimony trioxide blend is used as a fire retardant. Patent Reference 1 also cites epoxy resins, polyester resins, and modified resins thereof as examples of hot-melt resins.

Generally, halogen compounds with good flame retardancy have been used most often as flame retardants imparting high flame retardancy to an adhesive. Antinomy oxides have also been used jointly as needed. However, when adhesives containing a halogen compound or adhesives containing both a halogen compound and an antimony oxide burn, extremely toxic dioxin gas may be released, which is of concern from a global environmental perspective. Consequently, other hot-melt adhesives containing flame retardants which do not produce such toxic gases have been researched.

For example, Patent Reference 2 discloses a hot-melt-type sealing agent including at least a synthetic rubber, and in which are compounded, as fire retardants, a phosphoester and melamine or a melamine derivative. However, the compounding of a phosphoester, a polar material, with a synthetic rubber, a non-polar material, is problematic in that the blending of a synthetic rubber and a phosphoester is difficult. When a large amount of a phosphoester is compounded to increase flame retardancy, a problem exists in that, when the hot-melt adhesive is melted, the individual components are separable. Another problem exists in that, if for example, even if blending is achieved, sometime later, "bleedout" may occur in which the phosphoester migrates to the adhesive surface, compromising storage stability. In addition, the use of a synthetic rubber as a hot-melt resin makes the adhesive itself prone to occurrence of tackiness. If the adhesive becomes tacky, blocking and other such problems may occur in processes involving work on an electromagnetic shielding material or the like coated with the hot-melt adhesive. In essence, problems of workability arise.

Consequently, a need exists for a hot-melt-type, flame-retardant adhesive with superior flame retardancy, adhesive properties, storage stability, and workability even without inclusion of halogen compounds, antimony oxides, or other such flame retardants that affect the environment.

(Patent Reference 1) Japanese Unexamined Patent Application Publication No. 2004-211247 (Patent Reference 2) Japanese Unexamined Patent Application Publication No. 2007-099800

The present invention has an object of solving the aforementioned problems by offering a hot-melt-type adhesive and an item coated with said adhesive, wherein said adhesive is superior in overall performance such as flame retardancy, adhesive properties, storage stability, and workability even without the inclusion of halogen compounds, antimony oxides, or other such flame retardants that affect the environment.

As a result of painstaking research intended to solve the aforementioned problems, the present inventors completed the present invention after discovering that a hot-melt-type adhesive including a "(meth)acrylate polymer" as a hot-melt resin component and including a "phosphate compound in a liquid state at 180°C" as a flame retardant provides high flame retardancy without the inclusion of a halogen compound and an antinomy oxide, and that said hot-melt-type adhesive is also superior in overall performance such as adhesive properties, storage stability, and workability.

Specifically, according to one summary of the present invention, a novel hot-melt-type adhesive is offered which contains (A) a (meth)acrylate polymer and (B) a phosphate compound in a liquid state at 180°C. This hot-melt-type adhesive can be used ideally when applied, as a fire-retardant adhesive, to various items and affixed to an adherend, said items including, for example, electromagnetic shielding or other such structural members of electrical or electronic device parts, interior coverings for vehicles, and wall coverings or other such construction materials.

In one embodiment of the present invention, the aforementioned hot-melt-type adhesive is offered wherein component (A) is 5-35 wt parts, with the hot-melt-type adhesive representing a basis (100 wt parts).

In another embodiment of the present invention, the aforementioned hot-melt-type adhesive is offered wherein (A) the glass transition temperature of the (meth)acrylate polymer is 20-100°C.

In a preferred embodiment of the present invention, the aforementioned hot-melt-type adhesive offered is one wherein (B) the phosphorus compound includes a compound with a melting point of 20°C or higher.

In another embodiment of the present invention, a hot-melt-type adhesive is offered which also includes (C) a metal hydroxide.

In yet another embodiment of the present invention, the aforementioned hot-melt-type adhesive is offered wherein, with the total of components (A) - (C) representing 100 wt parts, component (A) is 5-35 wt parts, component (B) is 5-80 wt parts, and component (C) is 65 or fewer wt parts.

In another preferred embodiment of the present invention, the aforementioned hot-melt-type adhesive is offered wherein components (A) - (C) are contained in the hot-melt-type adhesive as 70 wt% or more.

In yet another preferred embodiment of the present invention, the aforementioned hot-melt-type adhesive is offered wherein (C) the metal hydroxide is magnesium hydroxide.

In the present specification, "hot-melt-type adhesive" means an adhesive which is solid at ambient temperature, and which adheres in a heated, molten state.

In the present specification, "glass transition temperature" means the temperature at an inflection point on a DSC curve obtained by measuring the DSC curve of a 5-10 mg sample at a temperature increase rate of 5°C/min using a differential scanning calorimeter (specifically, the SII NanoTechnology DSC6220 by SII NanoTechnology, Inc.).

In the present specification, "melting point" means the temperature at the peak of a DSC curve obtained by measuring the DSC curve of a 5-10 mg sample at a temperature increase rate of 5°C/min using a differential scanning calorimeter (specifically, the SII NanoTechnology DSC6220 by SII NanoTechnology, Inc.).

In the present specification, "bleedout" means migration of a flame retardant, plasticizer, or other such component included in a hot-melt-type adhesive to the surface of the adhesive.

The aforementioned hot-melt-type adhesive includes (A) a (meth)acrylate polymer and (B) a phosphate compound in a liquid state at 180°C and is therefore superior in overall performance such as flame retardancy, adhesive properties, storage stability, and workability, despite the fact that halogen compounds, antimony oxides, or other such flame retardants that affect the environment are not included.

When component (A) is 5-35 wt parts, with the hot-melt-type adhesive as a basis, overall performance such as flame retardancy, adhesive properties, storage stability, and workability is further improved. When the glass transition point of (A) the (meth)acrylate polymer is 20-100°C, workability is further improved. When (B) the phosphorous compound includes a compound with a melting point of 20°C or higher, workability is further improved.

When the hot-melt-type adhesive also includes (C) a metal hydroxide, flame retardancy is further improved, and workability is also further improved. When, with respect to 100 wt parts total weight of components (A) - (C), component (A) is 5-35 wt parts, component (B) is 5-80 wt parts, and component (C) is 65 or fewer wt parts, the viscosity of the hot-melt-type adhesive does not become excessive, and the application properties of the adhesive are further improved. When components (A) - (C) are contained in the hot-melt-type adhesive as 70 wt% or more, flame retardancy is further improved.

When (C) the metal hydroxide is magnesium hydroxide, the flame retardancy of the hot-melt-type adhesive is further improved. Items coated with the hot-melt-type adhesive pertaining to the present invention are environmentally friendly and are also highly safe for humans and superior in overall performance such as flame retardancy, adhesive properties, storage stability, and workability.

The hot melt adhesive of the present invention contains (A) a (meth)acrylate ester and (B) a phosphorus-based compound that is liquid at 180°C.

In the present invention, "(A) (meth)acrylate ester polymer" refers to a polymer made from a monomer (or a monomer blend) containing a (meth)acrylate ester. The (A) (meth)acrylate ester polymer can be made from one or more type of (meth)acrylate ester, or can be made from at least one type of monomer blend selected from one or more type of (meth)acrylate ester, "monomer having a (meth)acryloyl group other than the (meth)acrylate ester" and "other monomers containing an ethylenic double bond".

This (A) (meth)acrylate ester polymer can be obtained for example by radical polymerization of one or more monomer containing a (meth)acrylate ester (or blend thereof). Furthermore, the (A) (meth)acrylate ester polymer can be obtained for example by radical polymerization of a monomer blend containing one or more (meth)acrylate ester and at least one type of monomer selected from monomers with a (meth)acryloyl group other than a (meth)acrylate ester and monomers containing other ethylenic double bonds.

Examples of monomers that can be used for making the (meth)acrylate ester polymer are presented, but the present invention is in no way restricted to these examples.

Examples of "(meth)acrylate esters" include (meth)acrylate alkyl esters (including (meth)acrylate cycloalkyl esters) such as methyl (meth)acrylate, ethyl (meth)acrylate, propyl (meth)acrylate, butyl (meth)acrylate, hexyl after acrylate, octyl (meth)acrylate, 2-ethylhexyl (meth)acrylate, decyl (meth)acrylate, dodecyl (meth)acrylate, and cyclohexyl (meth)acrylate; (meth)acrylate esters with a hydroxyl group such as hydroxyethyl (meth)acrylate and the like; and (meth)acrylate esters having an epoxy group such as glycidyl (meth)acrylate and the like.

Examples of "monomers having a (meth)acryloyl group other than (meth)acrylate esters" include compounds having an acryloyl group and a sulfonate group and compounds having a sulfonic acid group and an acryloyl group, such as (meth)acrylic acid, (meth)acrylsulfonic acid, 2-acryloyl amino-2-methyl propane sulfonic acid, 2-methacryloyl amino-2-methyl propane sulfonic acid, and styrene sulfonic acid and a hydroxyl group; and compounds having a phosphate group and an acryloyl group or compounds having a phosphoric acid group and an acryloyl group such as (meth)acrylate oxyethyl amide phosphate and the like.

Note, in the present specification, acrylic acid and methacrylic acid are generally referred to as "(meth)acrylic acid", acrylate ester and methacrylate ester are generally referred to as "(meth)acrylate ester" or "(meth)acrylate", and acryloyl groups (CH2=CH-CO-) and methacryloyl groups (Ch2=CCH3-CO-) are generally referred to as "(meth)acryloyl groups".

Examples of the "other monomer containing other ethylenic double bonds capable of radical polymerization" include vinyl acetate, acrylamide, and styrene variants such as styrene and styrene sulfonic acid, and the like.

With the present invention, the (A) (meth)acrylate ester polymer can be a macromolecular compound where a single monomer type having at least one (meth)acryloyl group in one molecule is radical polymerized (homopolymer), or a macromolecular compound where a plurality of monomer types are blended and radical polymerized (copolymer).

The (A) (meth)acrylate ester polymer can be produced by a standard commonly known polymerization method, but a commercial product can also be used. Examples of commercial products that can be used include Dianal BR1122 (product name), Dianal BR117 (product name), Dianal BR106 (product name), Dianal BR73 (product name), and Dianal BR80 (product name), marketed by Mitsubishi Rayon Co., Ltd., as well as DEGALAN LL66/02 (product name) marketed by Degussa AG.

With the present invention, the (A) (meth)acrylate ester polymer can be one type, but two or more types can be blended and used if necessary.

With the present invention, the glass transition temperature of the (A) (meth)acrylate ester polymer is preferably between 20° C and 100° C, more preferably between 35° C and 70° C. If the glass transition temperature of the (A) (meth)acrylate ester polymer is lower than 20° C, the adhesive may be tacky, and there may be problems with processability. Furthermore, if the glass transition temperature of the (A) (meth)acrylate ester polymer exceeds 100° C, the heat seal properties will be inferior, the flexibility of the adhesive may be low, and there may be problems with fine cracking.

The hot melt adhesive of the present invention contains (B) a phosphorus-based compound that is liquid at 180° C as a flame retardant. Note, with the present invention, the (B) phosphorus-based compound that is liquid at 180° C also functions as a plasticizer.

With the present invention, "liquid at 180° C" means that the melting point of the phosphorus-based compound is lower than 180° C, and also means that the glass transition temperature is below 180° C if the phosphorus-based compound that is liquid at 180° C exhibits glass transition,

Furthermore, with the present invention, "phosphorus-based compound" refers to a compound containing at least one phosphorus atom in a molecule, and refers to compounds excluding the monomer that is used for making the "(A) (meth)acrylate ester polymer, but more preferably refers to a compound that is generally used as a flame retardant. Examples of phosphorus-based compounds that are generally used as flame retardants include phosphate ester compounds, condensed phosphate ester compounds, phosphazene compounds, phosphine oxide compounds, ammonium phosphate compounds, melamine phosphate compounds, cyclic phosphate ester compounds, and reactive phosphorus compounds having a functional group such as a hydroxyl group, carboxyl group, or amino group or the like on the aforementioned compounds.

Examples of the (B) phosphorus-based compound that is liquid at 180° C are presented below, but the present invention is in no way restricted by these examples.

Examples of phosphate ester compounds include trimethyl phosphate, triethyl phosphate, triphenyl phosphate, tricresyl phosphate, trixylenyl phosphate, cresyl phenyl phosphate, xylynyl diphenyl phosphate [Translators note: Possibly this should be xylenyl diphenyl phosphate], cresyl di-2,6-xylenyl and the like.

Examples of condensed phosphate ester compounds include 1,3-phenylene bis(biphenyl phosphate), 1,3-phenylene bis(dixylenyl phosphate), and bisphenol A bis(diphenyl phosphate).

Examples of phosphazene compounds include hexaphenoxy cyclotriphosphazene, and n-propoxyphosphazene oligomer where a propoxy group is substituted onto dichlorphosphazene obtained by ring opening polymerization of hexachlor cyclotriphosphazene, and the like.

Examples of reactive compounds with a functional group include bis(4-hydroxyphenyl) phenyl phosphine oxide and bis(4-carboxyphenyl) phenyl phosphine oxide and the like.

The (B) phosphorus-based compound that is a liquid at 180° C is preferably a condensed phosphate ester compound. The (B) phosphorus-based compound that is a liquid at 180° C can be used individually, or as a blend.

With the present invention, the (B) phosphorus-based compound that is a liquid at 180° C preferably contains at least one type of compound with a melting point of 20° C or higher, and more preferably contains a compound with a melting point of 60° C or higher. If the (B) phosphorus-based compound that is a liquid at 180° C does not contain a compound with a melting point of 20° C or higher, an article obtained by coating with the hot melt adhesive may experience bleed out or the like of the phosphorus-based compound, and there is a possibility that the storage stability will be insufficient.

Using the total of component (A) and component (B) as a basis (100 weight parts), the amount of component (A) is preferably 5 weight parts or more, and more preferably in a range between 10 and 90 weight parts.

The hot melt adhesive contains component (A) and component (B) as essential components, but may also contain other components. If the total amount of hotmelt adhesive is 100 weight parts, the amount of component (A) is preferably between 5 and 35 weight parts, more preferably between 5 and 30 weight parts. If the amount of component (A) is less than 5 weight parts, the amount of hotmelt resin component will be too low, so the strength of the adhesive might be insufficient. Furthermore, the adhesive force may be insufficient. If the amount of component (A) exceeds 35 weight parts, the ratio of flame retardant components will be too low, and flame retardancy may be insufficient.

The hot melt adhesive of the present invention preferably also contains (C) metal hydroxide. Examples of the (C) metal hydroxide include aluminum hydroxide, magnesium hydroxide, calcium hydroxide, titanium hydroxide, zinc hydroxide, and the like, and these compounds are also referred to as metal hydrate compounds. The metal hydroxide is generally used in microparticle form, but the surface can be treated with a hydrophobic compound such as an emulsifier or coupling agent or the like.

With the present invention, the (C) metal hydroxide is preferably aluminum hydroxide or magnesium hydroxide, from the perspective of achieving high flame retardancy and stability during storage.

With the present invention, the amount of (A) (meth)acrylate ester polymer is preferably between 5 weight parts and 35 weight parts, more preferably between 5 and 30 weight parts, using the total amount of components (A) through (C) as a basis (100 weight parts).If the amount of (A) (meth)acrylate ester polymer is less than 5 weight parts, the amount of hotmelt resin component will be too low, so the strength of the adhesive might be insufficient. Furthermore, the adhesive force may be insufficient. If the amount of (A) (meth)acrylate ester polymer exceeds 35 weight parts, the ratio of flame retardant component will be too low, and flame retardancy may be insufficient.

With the present invention, the amount of (B) phosphorus-based compound that is a liquid at 180° C is preferably between 5 weight parts and 80 weight parts, more preferably between 10 and 70 weight parts, using the total amount of components (A) through (C) as a basis (100 weight parts). If the amount of (B) phosphorus-based compound that is a liquid at 180° C is less than 5 weight parts, the flame retardancy might be insufficient. Furthermore, the amount of plasticizer component in the hot melt adhesive will also be too low, so the viscosity will be high and there might be problems with processability. If the amount of (B) phosphorus-based compound that is a liquid at 180° C exceeds 80 weight parts, bleed out of the phosphorus-based compound may occur, and the long-term storage stability may be insufficient.

With the present invention, the amount of (C) metal hydroxide is preferably 65 weight parts or less, more preferably between 5 weight parts and 65 weight parts, and particularly preferably between 15 and 65 weight parts, using the total about of components (A) through (C) as a basis (100 weight parts). If the amount of the (C) metal hydroxide exceeds 65 weight parts, the viscosity of the hot melt adhesive will be too high and there will be problems with processability.

The hot melt adhesive of the present invention preferably contains 70 weight % or more of the total of components (A) through (C), using the amount of hotmelt adhesive as a basis (100 weight %). If the total amount of components (A) through (C) is less than 70 weight % in the hot melt adhesive, the balance between flame retardants E, adhesion, and processability of the hot melt adhesive may be insufficient.

The hot melt adhesive of the present invention preferably contains between 3.5 weight % and 35 weight % of the (A) (meth)acrylate ester polymer, and preferably contains between 3.5 weight % and 80 weight % of the (B) phosphorus-based compound that is a liquid at 180° C, and preferably contains 65 weight % or less of the (C) metal hydroxide, using the amount of hotmelt adhesive as a basis (100 weight %).

With the present invention, the formulation ratio between the (A) (meth)acrylate ester polymer, (B) phosphorus-based compound that is a liquid at 180° C, and (C) metal hydroxide can be suitably adjusted within the aforementioned range so as to achieve the flame retardancy, adhesion, storage stability, and processability required of a hotmelt adhesive for various types of applications.

If necessary, the hot melt adhesive of the present invention can also contain various types of additives, either individually or as a combination of two or more types, such as plasticizers, antioxidants, stabilizers, other thermoplastic resins, fillers, metal corrosion inhibitors, pigments, antistatic agents, and reinforcing agents, and the like, within a range that the flame retardancy, adhesion, storage stability, and processability are not lost.

Examples of suitable plasticizers include aliphatic hydrocarbons derived from plant oil, animal oil, or petroleum (such as paraffin), aromatic hydrocarbons, aliphatic esters, phthalate esters (such as dibutyl phthalate, di-n-decyl phthalate, bis-2-ethylhexyl phthalate, diisononyl phthalate, or diisodecyl phthalate), adipate esters (such as ditridecyl adipate), sebacate esters, azelate esters, polyalkylene glycols (such as polyethylene glycol, polypropylene glycol, and polytetraethylene glycol) as well as polypropylene, polybutene, hydrogenated polyisoprene, hydrogenated polybutadiene, and polyacrylate oligomer and the like, with an average molecular weight from approximately 350 to approximately 10,000.

A plasticizer can be added depending on the objective such as for adjusting the properties and adjusting the performance. The amount of the aforementioned plasticizer added is preferably 30 weight % or less in the hot melt adhesive, in order to suppress bleeding.

The stabilizer or antioxidant can be a primary antioxidant or a secondary antioxidant, and the primary antioxidant and secondary antioxidant can be used individually, or can be used as a combination.

An example of a primary antioxidant is hindered phenol, and examples of secondary antioxidants include distearyl thiodipropionate (DSTD), and dilauryl thiodipropionate (DLTDP).

Specific examples of representative antioxidants include: 1,3,5-trimethyl-2,4,6-tris(3,5-di-t-butyl-4-hydroxy benzyl) benzene, pentaerythrityl tetrakis-3-(3,5-di-t-butyl-4-hydroxy phenyl) propionate, pentaerythritol tetrakis (3-thiodipropionate, n-octyldecyl-3,5-di-t-butyl-4-hydroxyphenyl) propionate, 4,4'-methylene bis(2,6-t-butylphenol), 4,4'-thiobis(6-t-butyl-o-creosol), 2,6-di-t-butyl phenol, 6-(4-hydroxyphenoxy)-2,4-bis(n-octalthio)-1,3,5-triazine, di-n-octadecyl 3, 5-di-t-butyl-4-hydroxy-benzyl-phosphonate, 2-(n-ontalthio) ethyl 3, 5-di-t-butyl-4-hydroxy-benzoate and sorbitol hexa [3-(3,5-di-t-butyl-4-hydroxy phenyl)-propionate], IRGAFOS 168 (secondary antioxidant that can be procured from Chiba) and IRGANOX 1010 (primary antioxidant containing hindered phenol procurable from Chiba-Geigy).

Examples of other antioxidants include Ethanox 330 (hindered phenol from Albermarle), Santovar (2,5-di-t-amylhydroquinone from Monsanto), and Nauagard P ((p-nonyl) phosphite from Uniroyal). The amount of these antioxidants added to the hotmelt adhesive is preferably 0.1 weight % or higher and 10 weight % or lower.

Examples of other thermoplastic resins include urethane resins made from polyether polyols and isocyanate or polyester polyols and isocyanate, polyester resins, and ethylene-vinyl acetate copolymer resins and the like. These resins can be used in order to adjust the physical properties of the hot melt adhesive. The amount of other thermoplastic resins in the hot melt adhesive is preferably between 0.5 and 30 weight %.

The filler is not particularly restricted, so long as the processability and adhesion of the hot melt adhesive are not lost, and examples include calcium carbonate, mica, talc, clay, zinc borate, gypsum, calcium aluminate, and dawsonite and the like.

The hot melt adhesive of the present invention can be manufactured by combining the aforementioned components. The method of adding the various components can be a commonly known method, and is not particularly restricted. Typically, the components other than the (C) metal hydroxide and filler are melted and combined, generally at a temperature between approximately 100° C and 200° C for approximately 1 hour until uniform. Next, the (C) metal hydroxide (and if necessary, filler) is added, melted and blended for approximately 30 minutes to produce the hot melt adhesive.

The present invention also provides an article that is coated with the hot melt adhesive of the present invention. Examples of the article of the present invention include component members for electric and electronic equipment and devices such as electromagnetic wave shielding members, automotive internal materials, and construction materials such as wall coating materials and the like. In other words, the hot melt adhesive of the present invention can be used in order to attach these articles to a body for adhesion.

If the article to be coated with the hot melt adhesive of the present invention includes a substrate, the hot melt adhesive is generally coated onto various types of substrates matching the target article. Articles that include this type of substrate include the aforementioned component members for electric and electronic equipment and devices such as electromagnetic wave shielding members, automotive internal materials, and construction materials such as wall coating materials and the like.

The substrates are not particularly restricted, but film substrates such as polyester, polypropylene, polyethylene, polyphenylene sulfide, polyimide, polyamide, polyacetate, polyether ether ketone, and polyolefin and the like; fabric substrates such as glass cloth, acetate cloth, and polyester and the like; and nonwoven materials such as polyester and aromatic polyamide and the like are preferable. The substrates can be used individually, or two or more types can be used in combination. Furthermore, the aforementioned substrates (or laminate substrates) can be laminated with paper, cloth, nonwoven material, or metal foil or the like if necessary. Furthermore a composite substrate with a metal vapor deposition or plating layer can also be used.

The method of coating the article with hot melt adhesive is not particularly restricted so long as the target article can be coated, but examples include die coater application, nozzle coater application, and roll coater application and the like. Note, if the article includes a substrate, the substrate is normally coated.

Examples of bodies for adhesion that the article coated with the hot melt adhesive of the present invention is adhered to include electric and electronic components, automotive components, and construction members and the like, but the present invention is in no way restricted by these examples.

Main aspects of the present invention are shown below.
1. A hotmelt adhesive, containing: (A) a (meth)acrylate ester polymer, and (B) a phosphorous-based compound that is liquid at 180°C.
2. The hot melt adhesive according to the aforementioned 1, wherein the amount of component (A) is between 5 and 35 weight parts, based on the amount of hot melt adhesive.
3. The hot melt adhesive shown in the aforementioned 1 or 2, wherein the (A) (meth)acrylate ester polymer has a glass transition temperature between 20 and 100° C.
4. The hot melt adhesive according to any one of the aforementioned 1 through 3, wherein the (B) phosphorus-based compound is at least one type of compound with a melting point of 20° C or higher.
5. The hot melt adhesive according to any one of the aforementioned 1 through 4, further comprising (C) a metal hydroxide.
6. The hot melt adhesive according to the aforementioned 5, wherein the amount of component (A) is between 5 and 35 weight parts, the amount of component (B) is between 5 and 80 weight parts, and the amount of component (C) is 65 weight parts or less, using the total of components (A) through (C) as 100 weight parts.
7. The hot melt adhesive according to the aforementioned 5 or 6, containing 70 weight % or more of components (A) through (C) in the hot melt adhesive.
8. The hot melt adhesive according to the aforementioned 5 through 7, wherein the (C) metal hydroxide is magnesium hydroxide.
9. An article, coated with a hot melt adhesive according to any one of the aforementioned 1 through 8.

The present invention is described below using working examples and comparative examples in order to describe the present invention in greater detail and more specifically. These working examples are provided in order to describe the present invention and in no way restrict the present invention.

The hot melt flame retardant adhesive of the present invention was manufactured by adding the (A) (meth)acrylate ester polymer, (B) phosphorus-based compound that is liquid at 180° C, and (C) metal hydroxide and the like according to the formulation (weight parts) shown in Table 1 and Table 2, and then heating melting and blending. The details are shown below.

### Working example 1

Component (A) (meth)acrylate ester polymer ["Dianal BR106" manufactured by Mitsubishi Rayon Co., Ltd. (weighted average molecular weight Mw approximately 60,000, glass transition temperature 50° C)] (hereinafter also referred to as "(A)-3"), component (B) phosphorus-based compound that is liquid at 180° C ["CR741" manufactured by Daihachi Chemical Industry Co., Ltd. (melting point 20°C or lower)] (hereinafter also referred to as "(B)-2"), and ["PX200" manufactured by Daihachi Chemical Industry Co., Ltd. (melting point 95° C)] (hereinafter also referred to as (B)-2") were added in the ratios shown in the following Table 1, melted and blended using an all-purpose mixer for approximately 2 hours at approximately 180° C to obtain a hot melt adhesive.

### Working Examples 2 to 6, Working Examples 8 through 13, and Comparative Example 5

(A)-3 as component (A) and (B)-1 and (B)-2 as component (B) were combined in the ratios shown in the following Table 1, and then ["APYMAG40S" manufactured by Nabaltec (magnesium hydroxide, particles size 5 µm)] (hereinafter also referred to as "(C)-1") was added as the component (C) metal hydroxide, and hot melt adhesive was obtained similar to working example 1.

### Working example 7

(A)-3 as component (A), and (B)-1 and ["Rabitle FP-110" manufactured by Fushimi Pharmaceutical Co., Ltd. (melting .110° C)] (hereinafter also referred to as "(B)-3") as component (B) were added in the ratios shown in the following Table 1, and then (C)-1 was added as component (C), and hot melt adhesive was obtained similar to working example 1.

### Working example 14

["Dianal BR1122" manufactured by Mitsubishi Rayon Co., Ltd. (weighted average molecular weight Mw approximately 180,000, glass transition temperature 20° C)] (hereinafter also referred to as "(A)-1") as component (A), and (B)-1 and (B)-2 as component (B) were added in the ratios shown in the following Table 1, and then (C)-1 was added as component (C), and hot melt adhesive was obtained similar to working example 1.

### Working example 15

["Dianal BR117" manufactured by Mitsubishi Rayon Co., Ltd. (weighted average molecular weight Mw approximately 140,000, glass transition temperature 35° C)] (hereinafter also referred to as "(A)-2") as component (A), and (B)-1 and (B)-2 as component (B) were added in the ratios shown in the following Table 1, and then (C)-1 was added as component (C), and hot melt adhesive was obtained similar to working example 1.

### Working example 16

["DEGALAN LL66/02" manufactured by Degussa AG (weighted average molecular weight Mw approximately 60,000, glass transition temperature 82° C)] (hereinafter also referred to as "(A)-4") as component (A), and (B)-1 and (B)-2 as component (B) were added in the ratios shown in the following Table 1, and then (C)-1 was added as component (C), and hot melt adhesive was obtained similar to working example 1.

### Working example 17

["Dianal BR73" manufactured by Mitsubishi Rayon Co., Ltd. (weighted average molecular weight Mw approximately 85,000, glass transition temperature 100° C)] (hereinafter also referred to as "(A)-5") as component (A), and (B)-1 and (B)-2 as component (B) were added in the ratios shown in the following Table 1, and then (C)-1 was added as component (C), and hot melt adhesive was obtained similar to working example 1.

### Working example 18

["Dianal BR80" manufactured by Mitsubishi Rayon Co., Ltd. (weighted average molecular weight Mw approximately 95,000, glass transition temperature 105° C)] (hereinafter also referred to as "(A)-6") as component (A), and (B)-1 and (B)-2 as component (B) were added in the ratios shown in the following Table 1, and then (C)-1 was added as component (C), and hot melt adhesive was obtained similar to working example 1.

### Working example 19

(A)-3 as component (A) and (B)-1 and (B)-2 as component (B) were combined in the ratios shown in the following Table 1, and then ["APYRAL AOH20" manufactured by Nabaltec (aluminum hydroxide, particles size 7 µm)] (hereinafter also referred to as "(C)-2") was added as the component (C) metal hydroxide, and hot melt adhesive was obtained similar to working example 1.

### Working example 20

(A)-3 as component (A), (B)-1 and (B)-2 as component (B), and (C)-1 as component (C), as well as diisononyl phthalate ["DINP" manufactured by J-Plus Co., Ltd.] (hereinafter also referred to as "(B)'-1") were combined and blended in the ratios shown in the following Table 1, and hot melt adhesive was obtained similar to working example 1.

### Comparative example 1

Styrene-butadiene-styrene block copolymer ["Asaprene T438" manufactured by Asahi Kasei Corporation (styrene content 35%)] (hereinafter also referred to as "(A)'-1 ") in place of component (A)-3 was added to (B)-1 and (B)-2 as component (B) and (C)-1 as component (C) in the ratios shown in the following Table 2, and a hot melt adhesive was obtained similar to working example 1.

### Comparative example 2

A polyester-based resin ["Vylon GM-990 manufactured by Toyobo Co., Ltd. (average molecular weight Mn approximately 8000)] (hereinafter also referred to as "(A)'-2") in place of component (A)-3 was added to (B)-1 and (B)-2 as component (B) and (C)-1 as component (C) in the ratios shown in the following Table 2, and a hot melt adhesive was obtained similar to working example 1.

### Comparative example 3

Ethylene-vinyl acetate copolymer ["Ultracene 760" manufactured by Tosoh Corporation (melted flowrate 70 g/min, vinyl acetate content 42%)] (hereinafter also referred to as "(A)'-3") in place of component (A)-3 was added to (B)-1 and (B)-2 as component (B) and (C)-1 as component (C) in the ratios shown in the following Table 2, and a hot melt adhesive was obtained similar to working example 1.

### Comparative example 4

(A)-3 as component (A), and (B)'-1 as component (B) were added in the ratios shown in the following Table 2, and then (C)-1 was added as component (C), and hot melt adhesive was obtained similar to working example 1.

### Comparative example 5

(A)-3 as component (A), and (C)-1 as component (C) were combined in the ratios shown in the following Table 2 without adding component (B), and hot melt adhesive was obtained similar to working example 1.

### Comparative example 6

(A)-3 as component (A), a phosphate-based flame retardant that is a solid at 180° C ["FR CROSS 484" manufactured by Budenheim (ammonium polyphosphate)] (hereinafter also referred to as "(B)'-2") in place of component (B), and (C)-1 as component (C) were combined in the ratios shown in the following Table 2, and hot melt adhesive was obtained similar to working example 1.

The hot melt adhesives of the working examples and comparative examples were evaluated according to the following procedures.

### Bleed out

Bleed out was evaluated by melting the hot melt adhesive at 180° C, allowing to sit for 12 hours in a 23° C environment, and then touching the surface of a hot melt adhesive sample by finger under the same environment. Samples without bleed out were evaluated as O, samples with slight bleed out were evaluated as Δ, and samples with pronounced bleed out were evaluated as X. No bleed out is an indicator that the long-term storage stability is favorable.

### Tack

Hot melt adhesive was applied to a thickness of 50 µm onto a 50 µm thick polyethylene terephthalate (PET) film at 130° C. The strength of the tackiness when the surface of the sample that was applied was touched by finger was evaluated. Samples with essentially no tackiness were evaluated as (O), samples with slight tackiness were evaluated as O, samples with weak tackiness were evaluated as Δ, and samples with strong tackiness were evaluated as X. Lack of tackiness is an indicator that the processability of a substrate coated with the hot melt adhesive is favorable.

### Adhesion

Hot melt adhesive was applied to a thickness of 50 µm onto a 50 µm thick polyethylene terephthalate (PET) film at 130° C. The coated sample was overlaid onto a similar 50 µm thick PET film and pressed for 5 seconds at a pressure of 0.3 MPa at a temperature of 120° C to make an overlaid test sample. The strength of the test sample was measured when T-type peeling was performed at a rate of 300 mm/minute at 23° C. Samples where the adhesive strength was 500 gf/25mm or higher were evaluated as (○), samples at 100 gf/25 mm or higher but less than 500 gf/25 mm were evaluated as ○, samples at 10 gf/25 mm or higher but less than 100 gf/25 mm were evaluated as Δ, and samples less than 10 gf/25 mm were evaluated as X.

### Flame retardancy

Adhesive was applied to a thickness of 50 µm onto a 50 µm thick polyethylene terephthalate (PET) film at 130° C. The coated sample was cut to a width of 10 mm to make a test sample. The evaluation was performed by measuring time from when the test sample was ignited for 1 second until the flame disappeared. Samples that did not ignite were evaluated as (O), samples that burned for less than 1 second were evaluated as O, samples that burned for 1 second or longer but less than 3 seconds or that dripped material due to burning were evaluated as Δ, and samples that burned for 3 seconds or longer were evaluated as X.

The aforementioned valuations were performed on the hot melt adhesives of the working examples and comparative examples, and the results are shown in Table 1 and Table 2.

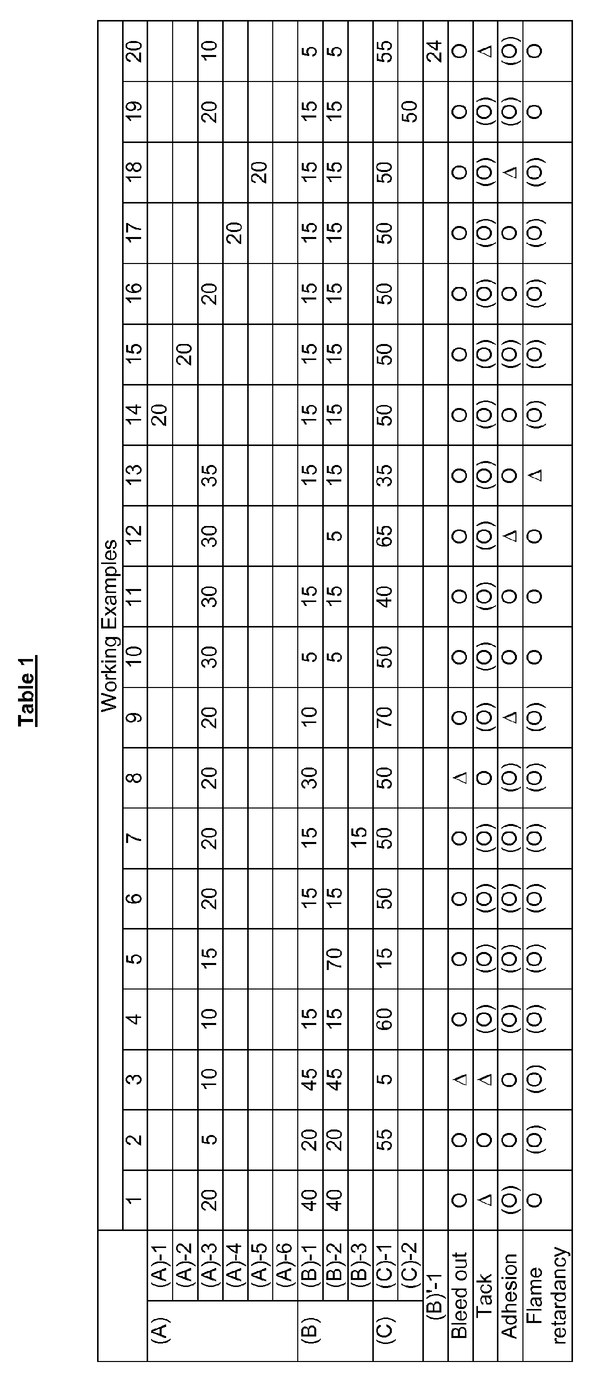

**Table 2**

| | | Comparative example | | | | | |
|---|---|---|---|---|---|---|---|
| | | 1 | 2 | 3 | 4 | 5 | 6 |
| (A) | (A)-1 | | | | 20 | 20 | 20 |
| (A)'-1 | | 20 | | | | | |
| (A)'-2 | | | 20 | | | | |
| (A)'-3 | | | | 20 | | | |
| (B) | (B)-1 | 15 | 15 | 15 | | | |
| | (B)-2 | 15 | 15 | 15 | | | |
| (B)'-1 | | | | | 30 | | |
| (B)'-2 | | | | | | | 30 |
| (C) | (C)-1 | 50 | 50 | 50 | 50 | 80 | 50 |
| | | | | | | | |
| Bleed out | | X | X | X | O | O | * |
| Tack | | X | Δ | Δ | Δ | (O) | |
| Adhesion | | O | O | (O) | O | X | |
| Flame retardancy | | (O) | (O) | (O) | X | (O) | |

| | | | | | | | |
|---|---|---|---|---|---|---|---|
| * A uniform adhesive could not be formed. | | | | | | | |

As shown in Table 1, the hot melt adhesive of working examples 1 through 20 had excellent overall performance for bleed out, tack, adhesion, and flame retardancy.

With the hot melt adhesives of comparative examples 1 through 3 that did not contain the (A) (meth)acrylate polymer, the compatibility of the (B) phosphorus-based flame retardant that is liquid at 180° C in the hot melt adhesive was insufficient, bleed out occurred, and the long-term storage stability was inferior. The hot melt adhesive of comparative example 4 that contain a liquid plasticizer that did not contain phosphorus in place of the (B) phosphorus-based compound that was a liquid at 180° C had insufficient flame retardancy. Furthermore, comparative example 5 that contained only the (A) (meth)acrylate polymer and the (C) metal hydroxide but did not contain the (B) phosphorus-based compound that is a liquid at 180° C had insufficient adhesion and there were problems with the processability of a sheet obtained by coating the adhesive onto a substrate. Furthermore, the hot melt adhesive of comparative example 6 that contained a phosphorus-based compound that was a solid at 180° C in place of the (B) phosphorus-based compound that was a liquid at 180°C did not form a uniform hot melt adhesive, and the coating properties were insufficient.

The hot melt adhesive of the present invention is a hot melt adhesive with high stability, excellent processability, and that is stable during long-term storage, and can be suitably used on articles such as component members of electric and electronic equipment and devices such as an electromagnetic wave shielding member, automotive interior material, and construction materials such as wall coating material and the like.

## Claims

1. A hotmelt adhesive, comprising: (A) a (meth)acrylate ester polymer, and (B) a phosphorous-based compound that is liquid at 180°C.

2. The hot melt adhesive according to claim 1, further comprising (C) a metal hydroxide.

3. An article, coated with a hot melt adhesive according to claim 1 or 2.
